(19) Europäisches Patentamt / European Patent Office / Office européen des brevets

(11) **EP 4 130 343 A1**

(12) **EUROPEAN PATENT APPLICATION**
published in accordance with Art. 153(4) EPC

(43) Date of publication:
**08.02.2023 Bulletin 2023/06**

(21) Application number: **21774945.6**

(22) Date of filing: **25.03.2021**

(51) International Patent Classification (IPC):
$C25B\ 11/055^{(2021.01)}$ $C01G\ 23/04^{(1968.09)}$
$C25B\ 9/00^{(1974.07)}$ $C25B\ 11/03^{(1974.07)}$

(52) Cooperative Patent Classification (CPC):
**C01G 23/04; C25B 9/00; C25B 11/03; C25B 11/055**

(86) International application number:
**PCT/JP2021/012678**

(87) International publication number:
**WO 2021/193857 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2020 JP 2020056277**

(71) Applicant: **Mitsubishi Materials Corporation Tokyo 100-8117 (JP)**

(72) Inventors:
• **SANO Yosuke**
 **Saitama-shi, Saitama 330-8508 (JP)**
• **OHMORI Shinichi**
 **Saitama-shi, Saitama 330-8508 (JP)**

(74) Representative: **Hoffmann Eitle Patent- und Rechtsanwälte PartmbB Arabellastraße 30 81925 München (DE)**

(54) **TITANIUM SUBSTRATE, METHOD FOR PRODUCING TITANIUM SUBSTRATE, ELECTRODE FOR WATER ELECTROLYSIS, AND WATER ELECTROLYSIS DEVICE**

(57) A titanium substrate of the present invention includes a substrate main body formed of titanium or a titanium alloy, in which a Magneli phase titanium oxide film formed of a Magneli phase titanium oxide represented by a chemical formula $Ti_nO_{2n-1}$ ($4 \leq n \leq 10$) is formed on a surface of the substrate main body and a BET value of the substrate main body on which the Magneli phase titanium oxide film is formed is 0.1 $m^2/g$ or less.

FIG. 2

EP 4 130 343 A1

**Description**

TECHNICAL FIELD

The present invention relates to a titanium substrate excellent in conductivity and corrosion resistance, a method for producing a titanium substrate, an electrode for water electrolysis formed of the titanium substrate, and a water electrolysis apparatus.

Priority is claimed on Japanese Patent Application No. 2020-056277, filed March 26, 2020, the content of which is incorporated herein by reference.

BACKGROUND ART

As shown in Patent Document 1 for example, titanium substrates formed of titanium or a titanium alloy are used in current-carrying members such as electrodes, in particular, in applications which require oxidation resistance (corrosion resistance).

However, for example, in a case of using a cathode electrode of a solid polymer electrolyte fuel cell (PEFC), an anode electrode of a water electrolysis apparatus, an electrode material for a lithium ion battery or a lithium ion capacitor, or the like in a harsh corrosive environment such as a high potential, oxygenated, strongly acidic atmosphere, there are problems in that the corrosion resistance is not sufficient and an insulative $TiO_2$ film is formed on the surface of the titanium substrate during use and the performance as a current-carrying member such as an electrode deteriorates.

Therefore, for example, Patent Document 2 proposes forming a noble metal film of gold, platinum, or the like on the surface of a substrate formed of aluminum, nickel, or titanium to improve corrosion resistance while ensuring conductivity.

In addition, Patent Document 3 proposes a titanium material in which an oxide film, in which an X-ray diffraction peak of $TiO_2$ is not observed, is formed on the surface of titanium or a titanium alloy.

Furthermore, Patent Document 4 proposes a titanium material having a titanium oxide layer having an oxygen/titanium atomic concentration ratio (O/Ti) of 0.3 or more and 1.7 or less on the surface of a titanium material formed of pure titanium or a titanium alloy, in which an alloy layer including at least one type of noble metal selected from Au, Pt, and Pd is formed on this titanium oxide layer.

Here, in a case where a noble metal film is formed as shown in Patent Document 2 and Patent Document 4, the cost increases greatly and wide use is not possible.

In addition, in the oxide film described in Patent Document 3, the conductivity and corrosion resistance are insufficient, thus, application is not possible as a member to be used in a harsh environment.

Therefore, Patent Document 5 proposes a titanium substrate on which a Magneli phase titanium oxide film formed of a Magneli phase titanium oxide represented by the chemical formula $Ti_nO_{2n-1}$ ($4 \leq n < 10$) is formed.

This Magneli phase titanium oxide has corrosion resistance equivalent to $TiO_2$ and conductivity equivalent to graphite and is able to be used even under harsh corrosive environments.

[Citation List]

[Patent Documents]

[Patent Document 1]
Japanese Unexamined Patent Application, First Publication No. 2003-226992
[Patent Document 2]
Japanese Unexamined Patent Application, First Publication No. 2010-135316
[Patent Document 3]
Japanese Patent No. 5831670
[Patent Document 4]
Japanese Unexamined Patent Application, First Publication No. 2010-236083
[Patent Document 5]
Japanese Unexamined Patent Application, First Publication No. 2019-157273

SUMMARY OF INVENTION

Technical Problem

In the titanium substrate described in Patent Document 5 described above, the Magneli phase titanium oxide film has a porous structure.

Here, depending on the use application of the titanium substrate, there may be a demand for excellent durability for the Magneli phase titanium oxide film in order to be used stably for a long period. In such use applications, there is a concern that, as described in Patent Document 5, the Magneli phase titanium oxide film with the porous structure may not be viable.

The present invention was made against the background of the above circumstances and has an object of providing a titanium substrate with particularly excellent conductivity and corrosion resistance and having superior durability, a method for producing a titanium substrate, an electrode for water electrolysis formed of this titanium substrate, and a water electrolysis apparatus.

Solution to Problem

In order to solve these problems and achieve the object described above, a titanium substrate of the present invention includes a substrate main body formed of titanium or a titanium alloy, in which a Magneli phase titanium oxide film is formed on a surface of the substrate main body, the Magneli phase titanium oxide film is formed of a Magneli phase titanium oxide represented by a chemical formula $Ti_nO_{2n-1}$ ($4 \leq n \leq 10$), and a BET value of the substrate main body on which the Magneli phase titanium oxide film is formed is 0.1 $m^2/g$ or less.

According to the titanium substrate having this configuration, since the Magneli phase titanium oxide film formed of a Magneli phase titanium oxide represented by the chemical formula $Ti_nO_{2n-1}$ ($4 \leq n \leq 10$) is formed on a surface of the substrate main body formed of titanium or a titanium alloy and the BET value of the substrate main body on which the Magneli phase titanium oxide film is formed is 0.1 $m^2/g$ or less, the conductivity and corrosion resistance are particularly excellent and the durability is also excellent.

Thus, stable use is possible for a long period in a harsh corrosive environment such as a high potential, oxygenated, strongly acidic atmosphere.

Here, in the titanium substrate of the present invention, it is preferable that the Magneli phase titanium oxide film contains at least one of $Ti_4O_7$ and $Ti_5O_9$.

In such a case, since the Magneli phase titanium oxide film contains at least one of $Ti_4O_7$ and $Ti_5O_9$, which are particularly excellent in conductivity and corrosion resistance, it is particularly suitable as a current-carrying member used in a harsh corrosive environment such as a high potential, oxygenated, strongly acidic atmosphere.

In addition, in the titanium substrate of the present invention, it is preferable that the Magneli phase titanium oxide film has a film thickness in a range of 0.01 $\mu$m or more and 3.0 $\mu$m or less.

In this case, since the film thickness of the Magneli phase titanium oxide film is 0.01 $\mu$m or more, it is possible to secure a sufficient corrosion resistance.

On the other hand, since the film thickness of the Magneli phase titanium oxide film is 3.0 $\mu$m or less, it is possible to secure sufficient conductivity as a titanium substrate.

Furthermore, in the titanium substrate of the present invention, preferably, the substrate main body is a porous body having a porosity in a range of 30% or more and 97% or less.

In this case, since the substrate main body formed of titanium or titanium alloy is a porous body and the porosity thereof is set to 30% or more, the specific surface area is increased and it is possible to promote the reaction on the surface of the titanium substrate. In addition, it is possible to efficiently discharge the gas generated by the reaction.

On the other hand, since the porosity of the substrate main body is set to 97% or less, it is possible to secure the strength of the substrate main body.

A method for producing the titanium substrate of the present invention includes a $TiO_2$ film forming step of forming a $TiO_2$ film on a surface of a substrate main body formed of titanium or a titanium alloy; and a reduction treatment step of reducing the $TiO_2$ film formed on the surface of the substrate main body by using a microwave plasma reduction method to obtain a Magneli phase titanium oxide film, the Magneli phase titanium oxide film being formed of a Magneli phase titanium oxide represented by a chemical formula $Ti_nO_{2n-1}$ ($4 < n < 10$), in which the titanium substrate described above is produced.

The method for producing a titanium substrate with this configuration is provided with a $TiO_2$ film forming step of forming a $TiO_2$ film on a surface of a substrate main body formed of titanium or a titanium alloy, and a reduction treatment step of reducing the $TiO_2$ film formed by a microwave plasma reduction method to obtain a Magneli phase titanium oxide film, thus, it is possible to produce a titanium substrate having a Magneli phase titanium oxide film formed of Magneli phase titanium oxide represented by the chemical formula $Ti_nO_{2n-1}$ ($4 < n < 10$).

The electrode for water electrolysis of the present invention includes the titanium substrate described above.

According to the electrode for water electrolysis with this configuration, since the configuration uses a titanium substrate on which the Magneli phase titanium oxide film formed of the Magneli phase titanium oxide represented by the chemical formula $Ti_nO_{2n-1}$ ($4 \leq n \leq 10$) is formed, the conductivity and corrosion resistance are particularly excellent, it is possible to suppress deterioration due to oxidation, and it is possible to significantly improve the service life. In addition, since the corrosion resistance is excellent, use is possible as a substitute for noble metal electrodes, and it is possible to configure an electrode for water electrolysis at low cost. Furthermore, since the BET value of the substrate main body on which the Magneli phase titanium oxide film is formed is 0.1 m²/g or less, the durability is excellent and stable use for a long period is possible.

Here, in the electrode for water electrolysis of the present invention, in a voltammetry test in which one cycle is denoted by a step of holding for 1 minute at 2.5 V and a step of holding for 1 minute at 0 V, an energy efficiency after 10 cycles is preferably 90% or more of an initial value.

In such a case, the durability is sufficiently excellent and stable use for a long period is possible.

A water electrolysis apparatus of the present invention includes the electrode for water electrolysis described above.

According to the electrode for water electrolysis having this configuration, since the electrode for water electrolysis formed of a titanium substrate on which the Magneli phase titanium oxide film formed of Magneli phase titanium oxide represented by the chemical formula $Ti_nO_{2n-1}$ ($4 \leq n \leq 10$) is formed is provided, it is possible to suppress deterioration of the electrode for water electrolysis due to oxidation during use. In addition, it is not necessary to use the noble metal electrode and it is possible to significantly reduce the production cost of the water electrolysis apparatus. Furthermore, since the BET value of the substrate main body on which the Magneli phase titanium oxide film is formed is 0.1 m²/g or less, the durability is excellent and stable use for a long period is possible.

Advantageous Effects of Invention

According to the present invention, it is possible to provide a titanium substrate with particularly excellent conductivity and corrosion resistance and with excellent durability, a method for producing a titanium substrate, an electrode for water electrolysis formed of this titanium substrate, and a water electrolysis apparatus.

BRIEF DESCRIPTION OF DRAWINGS

FIG. 1 is an explanatory diagram showing an example of a titanium substrate which is an embodiment of the present invention.
FIG. 2 is an enlarged schematic diagram of a surface layer portion of the titanium substrate shown in FIG. 1.
FIG. 3 is an SEM image showing cross-sectional observation results of the Magneli phase titanium oxide film of the titanium substrate, which is an embodiment of the present invention.
FIG. 4 is a flow chart showing an example of a method for producing the titanium substrate shown in FIG. 1.
FIG. 5 is an explanatory diagram showing production steps for producing the titanium substrate shown in FIG. 1. FIG. 5(a) shows a substrate main body preparing step S01, FIG. 5(b) shows a TiO2 film forming step S02, and FIG. 5(c) shows a reduction treatment step S03.
FIG. 6 is a schematic explanatory diagram of a water electrolysis apparatus provided with an electrode for water electrolysis which is an embodiment of the present invention.

DESCRIPTION OF EMBODIMENTS

A description will be given below of a titanium substrate, a method for producing a titanium substrate, an electrode for water electrolysis, and a water electrolysis apparatus, which are embodiments of the present invention, with reference to the accompanying drawings.

A titanium substrate 10 of the present embodiment is used as, for example, a current-carrying member such as a cathode electrode of a solid polymer electrolyte fuel cell (PEFC), an anode electrode of a water electrolysis apparatus, and an electrode material for a lithium ion battery or a lithium ion capacitor.

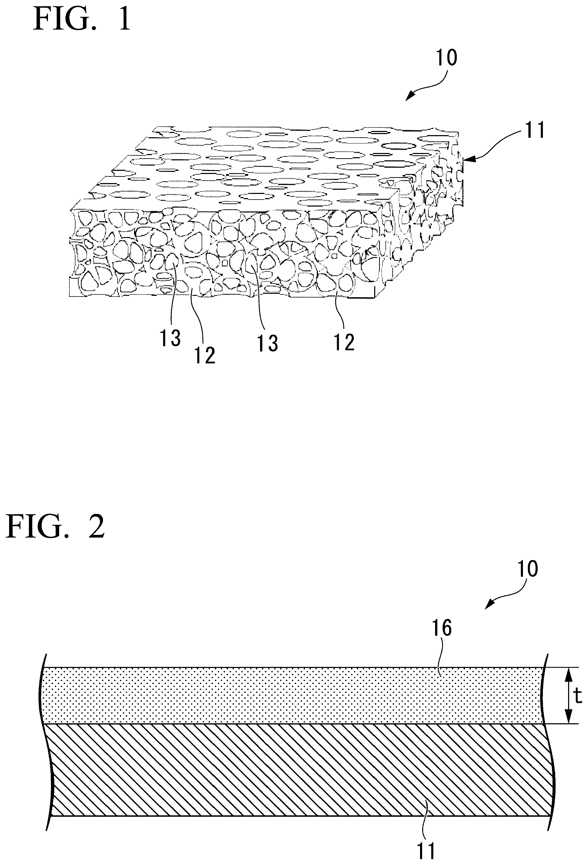

As shown in FIG. 1 and FIG. 2, the titanium substrate 10 of the present embodiment is provided with a substrate main body 11 formed of titanium or a titanium alloy, and a Magneli phase titanium oxide film 16 formed on the surface of the substrate main body 11.

In the present embodiment, as shown in FIG. 1, the substrate main body 11 is a porous body and is provided with a skeleton portion 12 having a three-dimensional network structure and a pore portion 13 surrounded by the skeleton portion 12.

The substrate main body 11 has a porosity P in a range of 30% or more and 97% or less. The porosity P of the substrate main body 11 is calculated by the following formula.

$$P(\%) = (1 - (W/(V \times DT))) \times 100$$

W: Mass of substrate main body 11 (g)
V: Volume of substrate main body 11 ($cm^3$)
DT: True density (g/ $cm^3$) of titanium or a titanium alloy which forms the substrate main body 11

In the present embodiment, the substrate main body 11 formed of this porous body is formed of, for example, a titanium sintered body obtained by sintering a titanium sintering raw material including titanium.

In addition, the pore portions 13 surrounded by the skeleton portion 12 are structured to communicate with each other and open toward the outside of the substrate main body 11.

In the titanium substrate 10 of the present embodiment, as shown in FIG. 2, the Magneli phase titanium oxide film 16 is formed on the surface of the substrate main body 11.

This Magneli phase titanium oxide film 16 is formed of a Magneli phase titanium oxide represented by the chemical formula $Ti_nO_{2n-1}$ ($4 \leq n \leq 10$).

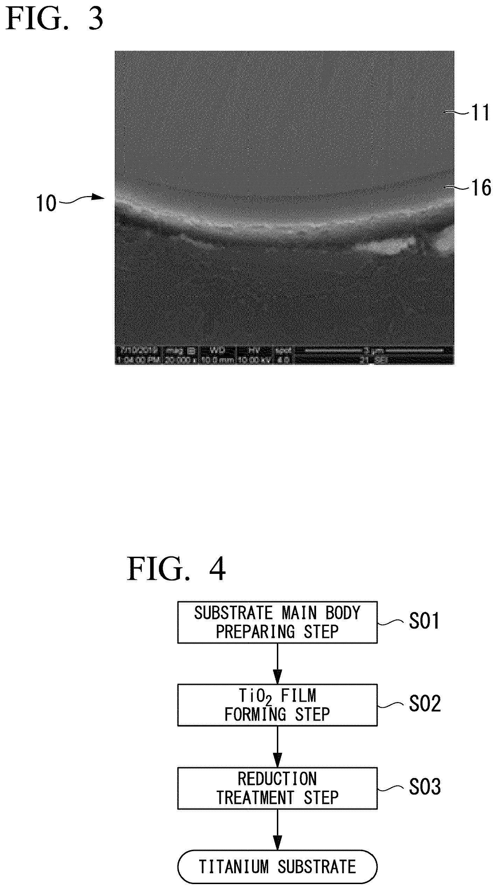

In the present embodiment, the Magneli phase titanium oxide film 16 is densely structured as shown in FIG. 3 and the BET value of the substrate main body 11 on which the Magneli phase titanium oxide film 16 is formed is 0.1 $m^2$/g or less.

In the present embodiment, the BET value of the substrate main body 11 on which the Magneli phase titanium oxide film 16 is formed is preferably 0.09 $m^2$/g or less and more preferably 0.08 $m^2$/g or less.

In addition, in the present embodiment, the Magneli phase titanium oxide film 16 preferably contains at least one of $Ti_4O_7$ and $Ti_5O_9$. It is possible to identify the titanium oxide structure in the Magneli phase titanium oxide film 16 by an X-ray diffraction analysis (XRD) method.

Here, in the Magneli phase titanium oxide film 16 of the present embodiment, the XRD peaks of $Ti_4O_7$ and $Ti_5O_9$ in X-ray diffraction (XRD) are included and the sum of the maximum peak intensities of both is greater than the maximum peak intensity of the other Magneli phase titanium oxide ($6 \leq n \leq 10$).

Here, when a film thickness t of the Magneli phase titanium oxide film 16 is thinned, the corrosion resistance is lowered but the conductivity is improved. On the other hand, when the film thickness t of the Magneli phase titanium oxide film 16 is increased, the corrosion resistance is improved but the conductivity is decreased. Therefore, the film thickness t of the Magneli phase titanium oxide film 16 is preferably set appropriately according to the properties required for the titanium substrate 10.

In the present embodiment, the lower limit of the film thickness t of the Magneli phase titanium oxide film 16 is 0.01 $\mu$m or more in order to sufficiently improve corrosion resistance. In addition, the upper limit of the film thickness t of the Magneli phase titanium oxide film 16 is 3.0 $\mu$m or less in order to sufficiently improve the conductivity.

In order to further improve the corrosion resistance, the lower limit of the film thickness t of the Magneli phase titanium oxide film 16 is preferably 0.02 $\mu$m or more, and more preferably 0.03 $\mu$m or more. On the other hand, in order to further improve the conductivity, the upper limit of the film thickness t of the Magneli phase titanium oxide film 16 is preferably 2.0 $\mu$m or less and more preferably 1.0 $\mu$m or less.

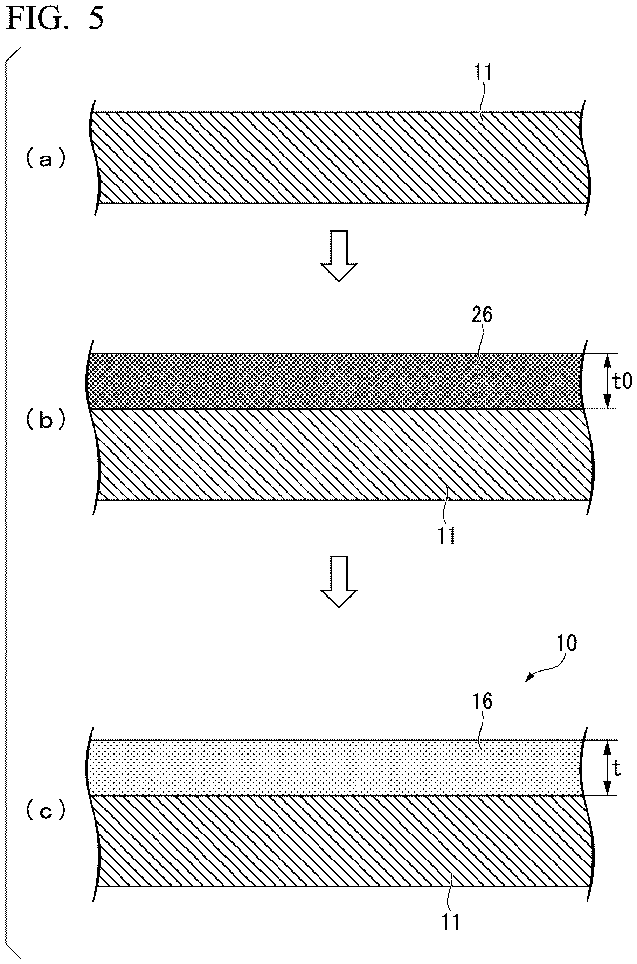

A description will be given below of the method for producing the titanium substrate 10 of the present embodiment with reference to the flow chart of FIG. 4, the step chart of FIG. 5, and the like.

(Substrate Main body Preparing Step S01)

First, the substrate main body 11 formed of titanium and a titanium alloy shown in FIG. 5(a) is prepared. In the present embodiment, a porous titanium sintered body is prepared as the substrate main body 11.

It is possible to produce the substrate main body 11 formed of this porous titanium sintered body, for example, by the following steps. A sintering raw material including titanium is mixed with an organic binder, a foaming agent, a plasticizer, water and, as necessary, a surfactant to prepare an effervescent slurry. This effervescent slurry is applied using a doctor blade (applying apparatus) to form a sheet-shaped molded body. This sheet-shaped molded body is heated to foam and obtain a foamed molded body. Then, the result is degreased and then sintered. Due to this, the substrate main body 11 formed of a porous titanium sintered body is prepared. (For example, refer to Japanese Unexamined Patent Application, First Publication No. 2006-138005 and Japanese Unexamined Patent Application, First Publication No. 2003-082405).

(TiO$_2$ Film Forming Step S02)

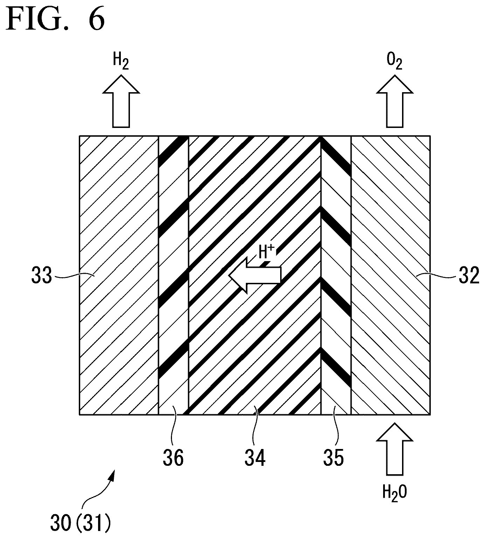

Next, as shown in FIG. 6(b), a TiO$_2$ film 26 is formed on the surface of the substrate main body 11. In the present embodiment, a TiO$_2$ film 26 with a dense structure is formed by applying a physical vapor deposition method (for example, ion plating (IP) or a sputtering method). Specifically, the surface of the substrate main body 11 is irradiated with titanium evaporated by an electron gun onto through a plasma formed of argon and oxygen gases. During irradiation, the substrate main body 11 is rotated to uniformly form the TiO$_2$ film 26 up to the inside of the substrate main body 11.
Here, the film thickness t0 of the TiO$_2$ film 26 is preferably in a range of 0.01 $\mu$m or more and 3.0 $\mu$m or less.

(Reduction Treatment Step S03)

Next, the TiO$_2$ film 26 is subjected to a reduction treatment using plasma generated by irradiating the gas with microwaves (microwave plasma reduction treatment), such that the TiO$_2$ film 26 is the Magneli phase titanium oxide film 16 formed of Magneli phase titanium oxide represented by the chemical formula Ti$_n$O$_{2n-1}$ ($4 \leq n \leq 10$), as shown in FIG. 5(c). In order to suppress oxygen from diffusing to the substrate main body 11 side, this reduction treatment step S03 is carried out under conditions of a substrate temperature of 400°C or lower and a treatment time of 15 minutes or less.
It is possible to set the lower limit value of the substrate temperature in the reduction treatment step S03 to 0°C, and the lower limit value of the treatment time to 0.01 minutes.
By subjecting the entire TiO$_2$ film 26 to a reduction treatment to form the Magneli phase titanium oxide film 16, the film thickness t0 of the TiO$_2$ film 26 becomes the film thickness t of the Magneli phase titanium oxide film 16. Therefore, adjusting the film thickness t0 of the TiO$_2$ film 26 in the TiO2 film forming step S02 makes it possible to control the film thickness t of the Magneli phase titanium oxide film 16.
By the production method described above, the titanium substrate 10 is produced in which the Magneli phase titanium oxide film 16 formed of Magneli phase titanium oxide represented by the chemical formula Ti$_n$O$_{2n-1}$ ($4 \leq n \leq 10$) is formed on the surface of the substrate main body 11 formed of titanium or a titanium alloy.
Next, fig. 6 shows a schematic diagram of the electrode for water electrolysis and the water electrolysis apparatus according to the present embodiment. The water electrolysis apparatus of the present embodiment is a solid polymer-type water electrolysis apparatus having high energy efficiency and hydrogen purity at the time of production.
As shown in FIG. 6, a water electrolysis apparatus 30 of the present embodiment is provided with a water electrolysis cell 31 provided with an anode electrode 32 and a cathode electrode 33 which are arranged to face each other, and an ion permeable membrane 34 which is arranged between the anode electrode 32 and the cathode electrode 33. Here, catalyst layers 35 and 36 are formed on both surfaces of the ion permeable membrane 34 (contact surface with the anode electrode 32 and contact surface with the cathode electrode 33), respectively.
Here, for the cathode electrode 33, the ion permeable membrane 34, and the catalyst layers 35 and 36, it is possible to use examples used in general solid polymer-type water electrolysis apparatuses of the related art.
The anode electrode 32 described above is used as the electrode for water electrolysis according to the present embodiment. The anode electrode 32 (electrode for water electrolysis) is formed of the titanium substrate 10 according to the present embodiment described above, and is provided with the substrate main body 11 formed of titanium or a titanium alloy and the Magneli phase titanium oxide film 16 formed on the surface of the substrate main body 11. In addition, the substrate main body 11 is a porous body, and has a structure provided with the skeleton portion 12 having a three-dimensional network structure and the pore portion 13 surrounded by the skeleton portion 12.
Here, in the electrode for water electrolysis (anode electrode 32) according to the present embodiment, in a voltammetry test in which one cycle is denoted by a holding time of 1 minute at 2.5 V and 1 minute at 0 V, the energy efficiency after 10 cycles is preferably 90% or more with respect to the initial value.
In the water electrolysis apparatus 30 (water electrolysis cell 31) described above, as shown in FIG. 6, water (H$_2$O) is supplied from the side of the anode electrode 32 and the anode electrode 32 and the cathode electrode 33 are energized. By doing so, oxygen (O$_2$) generated by the electrolysis of water is discharged from the anode electrode 32 and hydrogen (H$_2$) is discharged from the cathode electrode 33.
Here, in the anode electrode 32, as described above, water (liquid) and oxygen (gas) are circulated, thus, in order to stably circulate the liquid and gas, it is preferable to have a high porosity. In addition, since the anode electrode 32 is exposed to oxygen, there is a demand for excellent corrosion resistance. Therefore, the electrode for water electrolysis formed of the titanium substrate 10 of the present embodiment is particularly suitable as the anode electrode 32.
According to the titanium substrate 10 of the present embodiment configured as described above, since the Magneli phase titanium oxide film 16 formed of Magneli phase titanium oxide represented by the chemical formula Ti$_n$O$_{2n-1}$ ($4 \leq n \leq 10$) is formed on the surface of the substrate main body 11 formed of titanium or a titanium alloy, the conductivity and corrosion resistance are particularly excellent.
In the titanium substrate 10 of the present embodiment, since the BET value of the substrate main body 11 on which the Magneli phase titanium oxide film 16 is formed is 0.03 m$^2$/g or more and 0.1 m$^2$/g or less, the durability is also excellent.

Thus, stable use for a long period is possible in a harsh corrosive environment such as a high potential, oxygenated, strongly acidic atmosphere.

In addition, in the present embodiment, since the Magneli phase titanium oxide film 16 contains, as the Magneli phase titanium oxide, at least one of $Ti_4O_7$ and $Ti_5O_9$, which are particularly excellent in conductivity and corrosion resistance, it is particularly suitable as a current-carrying member used in a harsh corrosive environment such as a high potential, oxygenated, strongly acidic atmosphere.

Furthermore, in the present embodiment, since the film thickness t of the Magneli phase titanium oxide film 16 is in a range of 0.01 $\mu$m or more and 3.0 $\mu$m or less, it is possible to improve the corrosion resistance and the conductivity in a well-balanced manner.

In addition, in the present embodiment, since the substrate main body 11 formed of titanium or a titanium alloy is a porous body, and the porosity P thereof is set to 30% or more, the specific surface area becomes large and it is possible to promote a reaction on the surface of the titanium substrate 10. In addition, it is possible to efficiently discharge the gas generated by the reaction. Thus, the result is particularly suitable as an electrode member.

On the other hand, since the porosity P of the substrate main body 11 formed of a porous body is 97% or less, it is possible to secure the strength of the substrate main body 11.

Since the method for producing the titanium substrate 10 according to the present embodiment is provided with the substrate main body preparing step S01 for preparing the substrate main body 11 formed of titanium or a titanium alloy, the $TiO_2$ film forming step S02 of forming the $TiO_2$ film 26 on the surface of the substrate main body 11, and the reduction treatment step S03 of reducing the $TiO_2$ film 26 by using a microwave plasma reduction method to obtain the Magneli phase titanium oxide film 16 formed of a Magneli phase titanium oxide represented by the chemical formula $Ti_nO_{2n-1}$ ($4 \leq n \leq 10$), it is possible to produce the titanium substrate 10 having particularly excellent corrosion resistance and conductivity.

Then, in the $TiO_2$ film forming step S02, since the configuration is formed by forming the $TiO_2$ film 26 by a physical vapor deposition method (for example, ion plating or sputtering method), it is possible to form the $TiO_2$ film 26 with a dense structure. Thus, it is possible to make the Magneli phase titanium oxide film 16 formed after the reduction treatment step S03 have a dense structure.

Furthermore, adjusting the film thickness t0 of the $TiO_2$ film 26 formed in the $TiO_2$ film forming step S02 makes it possible to accurately control the film thickness t of the Magneli phase titanium oxide film 16.

Since the electrode for water electrolysis (anode electrode 32) of the present embodiment is formed of the titanium substrate 10 described above, the conductivity and corrosion resistance are particularly excellent and the durability is excellent, it is possible to suppress deterioration due to oxidation, and stable use for a long period is possible. In addition, since corrosion resistance is excellent, use is possible as a substitute for the noble metal electrode, and it is possible to form an electrode for water electrolysis (anode electrode 32) at low cost.

In the water electrolysis apparatus 30 of the present embodiment, since the electrode for water electrolysis formed of the titanium substrate 10 described above is used for the anode electrode 32 and the conductivity and corrosion resistance are particularly excellent and the durability is excellent, even in a use environment exposed to oxygen gas, it is possible to suppress deterioration of the electrode for water electrolysis (anode electrode 32) due to oxidation and to use the electrode stably for a long period. In addition, since the corrosion resistance is excellent, it is not necessary to use a noble metal electrode, and it is possible to significantly reduce the production cost of the water electrolysis apparatus 30. Furthermore, since the titanium substrate 10 is formed of the porous body having the structure described above, it is possible to favorably circulate water and oxygen gas.

Although embodiments of the present invention were described above, the present invention is not limited thereto and appropriate modification is possible without departing from the technical idea of the invention.

For example, in the present embodiment, the substrate main body 11 was described as a porous body, but the present invention is not limited thereto and the substrate main body 11 may be in the shape of a plate, wire, rod, tube, or the like. In addition, the substrate main body 11 was described as being formed of a titanium sintered body, but, without being limited thereto, a mesh plate or the like may be used.

In addition, in the present embodiment, the Magneli phase titanium oxide film was described as containing at least one of $Ti_4O_7$ and $Ti_5O_9$, but the present invention is not limited thereto, and the above may be formed of Magneli phase titanium oxide represented by the chemical formula $Ti_nO_{2n-1}$ ($4 \leq n \leq 10$).

Furthermore, in the present embodiment, description was given assuming that the film thickness of the Magneli phase titanium oxide film was in a range of 0.01 $\mu$m or more and 3.0 $\mu$m or less, but the present invention is not limited thereto and the film thickness of the Magneli phase titanium oxide film is preferably set as appropriate according to the properties required for the titanium substrate.

Furthermore, in the present embodiment, a water electrolysis apparatus (water electrolysis cell) having the structure shown in FIG. 6 was described as an example, but the present invention is not limited thereto and as long as an electrode for water electrolysis formed of the titanium substrate according to the present embodiment is provided, the water electrolysis apparatus (water electrolysis cell) may have another structure.

EXAMPLES

A description will be given below of the results of confirmation experiments performed to confirm the effects of the present invention.

First, the substrate main body shown in Table 1 is prepared. In Table 1, "titanium" was pure titanium having a purity of 99.9 mass% or more, and "titanium alloy" was a titanium alloy having Ti-0.15 mass% Pd.

The dimensions of each prepared substrate main body were width 50 mm × length 60 mm × thickness 0.3 mm.

Next, a $TiO_2$ film was formed on the surface of the substrate main body using the methods and conditions shown in Table 1.

Next, the substrate main body on which the $TiO_2$ film was formed was subjected to a reduction treatment using the methods and conditions shown in Table 1.

As described above, a titanium substrate was obtained which had a titanium oxide film (Magneli phase titanium oxide film in the Invention Examples) formed on the surface of a substrate main body formed of titanium or a titanium alloy.

With respect to the obtained titanium substrate, the identification of the titanium oxide film, and the film thickness, the conductivity, and the corrosion resistance of the titanium oxide film were evaluated as follows.

(Identification of Titanium Oxide in Titanium Oxide Film)

The titanium oxide of the titanium oxide film was identified by the X-ray diffraction analysis (XRD) method. The acceleration voltage was set to 30 keV and a Cu Ka line of 8 keV was used for measurement. The measurement range was 20 = 15° to 35°. The presence/absence of $Ti_4O_7$ and $Ti_5O_9$ was confirmed by the presence/absence of peaks near 21°, 26°, and 30° ($Ti_4O_7$), 22°, 26°, and 29° ($Ti_5O_9$), respectively. The evaluation results are shown in Table 2.

(BET Value of Substrate main body on which Magneli Phase Titanium Oxide Film is Formed)

The sample after forming was cut into square pieces of 2 mm × 2 mm or less and approximately 0.3 g was filled into a sample folder. The sample folder was placed in an Autosorb-iQ2 manufactured by Quantachrome and degassed at a temperature of 200°C for 60 minutes. Thereafter, krypton gas was introduced and the specific surface area was measured.

(Thickness of Titanium Oxide Film)

The sample after film formation is filled with resin and cut in the direction perpendicular to the thickness direction of the titanium oxide film to expose a cross-section thereof. This cross-section was observed by SEM, and five points were equally taken from one end to the other end of the titanium oxide film layer in the SEM image observed at a magnification of 20,000 times and the thicknesses were calculated for each point. Then, the thickness of the titanium oxide film was determined from the average value of the measured 5 points.

(Conductivity)

From the obtained titanium substrate, a strip-shaped test piece which was width 30 mm × length 40 mm × thickness 0.3 mm was prepared and the electrical conductivity was measured by the 4-probe method. When the measured electrical conductivity value was 1 S/cm or more, the evaluation was "O", and when less than 1 S/cm, the evaluation was "x". The evaluation results are shown in Table 2.

(Corrosion Resistance)

Cyclic voltammetry measurement was performed in a cell with a radius of 4 cm filled with 1 M sulfuric acid, with the created titanium substrate prepared as the working electrode and the coiled Pt wire as the counter electrode. The sweep was repeated between 0-2V for the Ag/AgCl electrode used as the reference electrode. Cyclic voltammetry was measured for 1,000 cycles, and when no change was seen in the CV waveform, the evaluation was "O", and when a change was observed, the evaluation was "x". The evaluation results are shown in Table 2.

(Stability)

Furthermore, the stability of Invention Example 6 and Comparative Examples 5 and 6 as a water electrolysis electrode was confirmed.

The titanium substrates described above were each used as anode electrodes to form a solid polymer type water electrolysis cell (area 4 cm × 4 cm) with the structure shown in FIG. 5.

A voltammetry test in which one cycle is a step of holding for 1 minute at 2.5 V and a step of holding for 1 minute at 0 V, was carried out with respect to the water electrolysis cell. The current density that flowed through the cell due to water electrolysis was measured. The test temperature was 80°C. The evaluation results are shown in Table 3.

Here, Table 3 shows the current density at the first cycle as the initial value, this initial value as the reference value (1.0), and the ratio of the current density after each cycle to the initial value.

[Table 1]

| | | Substrate main body | | TiO$_2$ film forming step | | | | Reduction treatment step | | |
|---|---|---|---|---|---|---|---|---|---|---|
| | | Substance | Form | Method | Process temperature (°C) | Process time (min) | Film thickness ($\mu$m) | Method | Substrate temperature (°C) | Process time (min) |
| Invention Example | 1 | Titanium | Plate | IP | 25 | 180 | 3.0 | Microwave reduction | 80 | 1 |
| | 2 | Titanium | Plate | IP | 25 | 3 | 0.01 | Microwave reduction | 30 | 0.1 |
| | 3 | Titanium | Porous body (porosity 60%) | IP | 25 | 30 | 0.5 | Microwave reduction | 50 | 0.5 |
| | 4 | Titanium alloy | Porous body (porosity 60%) | IP | 25 | 30 | 0.5 | Microwave reduction | 50 | 0.5 |
| | 5 | titanium | Porous body (porosity 30%) | IP | 25 | 30 | 0.5 | Microwave reduction | 50 | 0.5 |
| | 6 | Titanium | Porous body (porosity 90%) | IP | 25 | 30 | 0.5 | Microwave reduction | 50 | 0.5 |
| Comparative Example | 1 | Titanium | Plate | IP | 25 | 30 | 0.5 | - | - | - |
| | 2 | Titanium | Porous body (porosity 60%) | Atmospheric sintering | 500 | 180 | - | - | - | - |
| | 3 | Titanium | Porous body (porosity 60%) | IP | 25 | 30 | 0.5 | Thermal reduction | 1000 | 60 |
| | 4 | Titanium | Porous body (porosity 80%) | - | - | - | - | | - | - |
| | 5 | Titanium | Porous body (porosity 80%) | Plasma electrolytic oxidation | 25 | 20 | 2 | Microwave reduction | 50 | 0.5 |
| | 6 | Titanium | Porous body (porosity 80%) | IP | 25 | 30 | 0.5 | | - | - |

[Table 2]

| | | Magneli phase* | | Film thickness of titanium oxide film ($\mu$m) | Conductivity | Corrosion resistance |
|---|---|---|---|---|---|---|
| | | Present or absent | BET value ($m^2$/g) | | | |
| Invention Example | 1 | Present | 0.06 | 3.0 | O | O |
| | 2 | Present | 0.07 | 0.05 | O | O |
| | 3 | Present | 0.06 | 0.5 | O | O |
| | 4 | Present | 0.06 | 0.5 | O | O |
| | 5 | Present | 0.06 | 0.5 | O | O |
| | 6 | Present | 0.06 | 0.5 | O | O |
| Comparative Example | 1 | Absent | - | 0.5 | - | - |
| | 2 | Absent | - | - | - | - |
| | 3 | Absent | - | - | - | - |
| | 4 | Absent | - | - | O | - |
| | 5 | Present | 0.67 | 2.0 | O | O |
| | 6 | Absent | - | 0.5 | - | - |
| * Magneli phase: Magneli phase titanium oxide represented by chemical formula $Ti_nO_{2n-1}$ ($4 \leq n \leq 10$) | | | | | | |

[Table 3]

| | Voltammetrv test | | | |
|---|---|---|---|---|
| | First time | Second time | Fifth time | Tenth time |
| Example 6 | 1.00 | 1.02 | 1.04 | 0.98 |
| Comparative Example 5 | 1.00 | 0.93 | 0.88 | 0.83 |
| Comparative Example 6 | - | - | - | - |
| * Measurement voltage was 2.5 V<br>* Current density ratio with respect to 1 cycle<br>* Comparative Example 6 had a low current density (0.1 A/$cm^2$ in one cycle) and a performance as an electrode was not realized. | | | | |

In Comparative Example 1, a $TiO_2$ film was formed by the ion plating method, but since microwave reduction was not applied, there was no Magneli phase and the conductivity was inferior.

In Comparative Example 2, the substrate main body was oxidized by the atmospheric sintering method, but the $TiO_2$ film was not formed and deterioration occurred due to oxygen diffusion into the titanium substrate. For this reason, use as an electrode was not possible.

In Comparative Example 3, a $TiO_2$ film was formed by the ion plating method and the thermal reduction method was used for subsequent reduction, but deterioration occurred due to oxygen diffusion into the titanium substrate.

In Comparative Example 4, since no film was formed, there was no corrosion resistance at all.

In Comparative Example 5, a $TiO_2$ film was formed by the plasma electrolytic oxidation method and reduced by using the microwave reduction method; however, the performance of the electrode was inferior to that of Invention Example 6 in the 10th cycle in the stability evaluation as an electrode according to the PV method. The BET value of the substrate main body on which the Magneli phase titanium oxide film was formed in Comparative Example 5 was a value six times or more larger than 0.1 $m^2$/g.

In Comparative Example 6, a $TiO_2$ film was formed on the porous titanium body by the ion plating method and no subsequent reduction was performed, thus, there was no Magneli phase and the conductivity was poor. It was not possible to perform the measurement in the voltammetry test due to the poor electrical conductivity.

In contrast, in Invention Examples 1 to 6 in which the BET value of the substrate main body on which the Magneli phase titanium oxide film was formed was 0.1 $m^2/g$ or less, it was confirmed that the conductivity and corrosion resistance were excellent.

In addition, it was also confirmed that the material has sufficient durability in a case of being used as an electrode for water electrolysis.

[Reference Signs List]

10: Titanium substrate
11: Substrate main body
16: Magneli phase titanium oxide film
26: $TiO_2$ film
30: Water electrolysis apparatus
32: Anode electrode (electrode for water electrolysis)

**Claims**

1.  A titanium substrate comprising:

    a substrate main body formed of titanium or a titanium alloy,
    wherein a Magneli phase titanium oxide film is formed on a surface of the substrate main body,
    the Magneli phase titanium oxide film is formed of a Magneli phase titanium oxide represented by a chemical formula $Ti_nO_{2n-1}$ ($4 < n < 10$), and
    a BET value of the substrate main body on which the Magneli phase titanium oxide film is formed is 0.1 $m^2/g$ or less.

2.  The titanium substrate according to Claim 1,
    wherein the Magneli phase titanium oxide film contains at least one of $Ti_4O_7$ and $Ti_5O_9$.

3.  The titanium substrate according to Claim 1 or 2,
    wherein the Magneli phase titanium oxide film has a film thickness in a range of 0.01 $\mu$m or more and 3.0 $\mu$m or less.

4.  The titanium substrate according to any one of Claims 1 to 3,
    wherein the substrate main body is a porous body having a porosity in a range of 30% or more and 97% or less.

5.  A method for producing a titanium substrate, in which the titanium substrate according to any one of Claims 1 to 4 is produced, the method comprising:

    a $TiO_2$ film forming step of forming a $TiO_2$ film on a surface of a substrate main body formed of titanium or a titanium alloy; and
    a reduction treatment step of reducing the TiOz film formed on the surface of the substrate main body by using a microwave plasma reduction method to obtain a Magneli phase titanium oxide film, the Magneli phase titanium oxide film being formed of a Magneli phase titanium oxide represented by a chemical formula $Ti_nO_{2n-1}$ ($4 \leq n \leq 10$).

6.  An electrode for water electrolysis, comprising:
    the titanium substrate according to any one of Claims 1 to 4.

7.  The electrode for water electrolysis according to Claim 6,
    wherein, in a voltammetry test in which one cycle is denoted by a step of holding for 1 minute at 2.5 V and a step of holding for 1 minute at 0 V, an energy efficiency after 10 cycles is 90% or more of an initial value.

8.  A solid polymer-type water electrolysis apparatus comprising:
    the electrode for water electrolysis according to Claim 6 of 7.

FIG. 1

FIG. 2

# FIG. 3

# FIG. 4

SUBSTRATE MAIN BODY
PREPARING STEP — S01

↓

TiO₂ FILM
FORMING STEP — S02

↓

REDUCTION
TREATMENT STEP — S03

↓

TITANIUM SUBSTRATE

FIG. 5

（a）

11

⇩

（b）

26

t0

11

⇩

（c）

10

16

t

11

# FIG. 6

## INTERNATIONAL SEARCH REPORT

| International application No. |
| --- |
| PCT/JP2021/012678 |

### A. CLASSIFICATION OF SUBJECT MATTER

C25B 11/055(2021.01)i; C01G 23/04(2006.01)i; C25B 9/00(2021.01)i; C25B 11/03(2021.01)i
FI: C25B11/055; C01G23/04 C; C25B9/00 A; C25B11/03

According to International Patent Classification (IPC) or to both national classification and IPC

### B. FIELDS SEARCHED

Minimum documentation searched (classification system followed by classification symbols)
C01G23/04; C25B9/00; C25B11/03; C25B11/055

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2019-157273 A (MITSUBISHI MATERIALS CORP.) 19 September 2019 (2019-09-19) paragraphs [0009], [0011]-[0013], [0015], [0038], [0049], [0073] | 1-8 |
| Y | WO 2018/139613 A1 (ASAHI KASEI CORPORATION) 02 August 2018 (2018-08-02) paragraph [0057] | 1-8 |
| Y | JP 2019-143235 A (ASAHI KASEI CORPORATION) 29 August 2019 (2019-08-29) paragraphs [0039]-[0041], [0044] | 1-8 |

☐ Further documents are listed in the continuation of Box C.    ☒ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 28 May 2021 (28.05.2021) | 08 June 2021 (08.06.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

Information on patent family members

| International application No. |
| --- |
| PCT/JP2021/012678 |

| Patent Documents referred in the Report | Publication Date | Patent Family | Publication Date |
| --- | --- | --- | --- |
| JP 2019-157273 A | 19 Sep. 2019 | (Family: none) | |
| WO 2018/139613 A1 | 02 Aug. 2018 | EP 3575440 A1 paragraph [0082] | |
| JP 2019-143235 A | 29 Aug. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020056277 A
- JP 2003226992 A
- JP 2010135316 A
- JP 5831670 B
- JP 2010236083 A
- JP 2019157273 A
- JP 2006138005 A
- JP 2003082405 A